# EUROPÄISCHE PATENTSCHRIFT

(11) **EP 3 997 375 B1**
(45) Veröffentlichungstag und Bekanntmachung des Hinweises auf die Patenterteilung: **19.10.2022**
(21) Anmeldenummer: 21733734.4
(22) Anmeldetag: 09.06.2021
(51) Int. Cl.: F16L 55/163

(54) **DICHTUNGSINNENMANSCHETTE ZUM EINSETZEN IN ROHRE**
INNER SEALING SLEEVE FOR INSERTING INTO PIPES
MANCHON D'ÉTANCHÉITÉ INTERNE DESTINÉ À ÊTRE INSÉRÉ DANS DES TUYAUX

(30) Priorität: 01.09.2020 DE 102020122833
(43) Veröffentlichungstag der Anmeldung: 18.05.2022
(73) Patentinhaber: Amex Sanivar AG, 4623 Neuendorf (CH)
(72) Erfinder: HELFGEN, Darvin, 40470 Düsseldorf (DE); VOLLENBROICH, Maximilian, 40239 Düsseldorf (DE)
(74) Vertreter: Ksoll, Peter
(86) Internationale Anmeldenummer: PCT/EP2021/065475
(87) Internationale Veröffentlichungsnummer: WO 2022/048805

(56) Entgegenhaltungen:
- WO-A1-2019/158160
- DE-U1-202010 013 588
- DE-U1-202016 104 723

## Beschreibung

Die Erfindung betrifft eine Dichtungsinnenmanschette zum Einsetzen in Rohre gemäß den Merkmalen im Oberbegriff von Anspruch 1.

Dichtungsinnenmanschetten kommen zum Abdichten von Rohrleitungen mit undichten Rohrverbindungen oder Rissen zum Einsatz. Insbesondere handelt es sich um eine sogenannte Liner-End-Manschette. Diese kommen zur dauerhaften, dichten Anbindung von Liner-Systemen an ein Altrohr oder eine schachtseitige Rohranbindung zum Einsatz.

Eine Dichtungsinnenmanschette zum Einsetzen in Rohre die bei der Sanierung von Rohrleitungen eingesetzt wird, ist durch die DE 195 44 877 C1 bekannt. Die dort offenbarte Dichtungsinnenmanschette besteht aus einem ringförmig zusammengebogenen aufweitbaren Stahlband, dessen Bandenden sich in Umfangsrichtung überlappen. Die Dichtungsinnenmanschette weist eine Arretierungsvorrichtung auf mit einem am innenliegenden Bandende im Umfangsrichtung angeordneten Schlitz, dessen eine Längskante eine Zahnreihe trägt. Weiterhin ist am außenliegenden Bandende ein Spannritzel drehbar gelagert, welches in die Zahnreihe eingreift. Hierbei ist ein Rastorgan vorgesehen, das unter Einwirkung eines Federelements steht und in die Zahnung des Spannritzels eingreift.

Die Dichtungsmanschette gemäß der DE 10 2016 006 561 A1 soll insbesondere bei der Sanierung von Rohrversätzen zur Anwendung kommen. Die Dichtungsinnenmanschette weist zwei aus Stahlblechen in Form eines Kegelstumpfs oder im Wesentlichen zylindrisch rund gebogene Manschettenkörper auf. Die freien Enden der Stahlbleche der Manschetten überlappen sich in deren Umfangsrichtung. In diesen Überlappungsbereichen ist jeweils eine Arretierungsvorrichtung angeordnet. Die beiden Manschetten sind mit Abstand zueinander in einem verformbaren Hüllrohr angeordnet.

Bei der in der DE 10 2014 111 916 B4 beschriebenen Dichtungsinnenmanschette weist jedes der endseitigen Bandteile mindestens eine Öffnung auf, wobei die Öffnungen im Überlappungsbereich der Bandenden ein Paar von Öffnungen bilden. In jedem Paar von Öffnungen ist ein Halteelement angeordnet. Das Halteelement besteht aus Kunststoff und ist so gefertigt und eingesetzt, dass es beim Aufweiten der Dichtungsmanschette abbricht.

Des Weiteren zählt durch die DE 10 2012 111 341 B3 eine Dichtungsinnenmanschette zum Stand der Technik mit einem Manschettenkörper aus einem ringförmig zusammengebogenen und aufweitbaren Band, dessen Bandenden sich in Umfangsrichtung überlappen. Eine Arretierungsvorrichtung verhindert, dass das innere Bandende relativ zum äußeren Bandende entgegen der Aufweitrichtung verlagerbar ist. Die dort vorgesehene Arretierungsvorrichtung weist mindestens zwei parallel zueinander angeordnete Zahnreihen auf, wobei in jeder der Zahnreihen ein eigenes Spannritzel eingreift. Die beiden Zahnreihen sind an gegenüberliegenden Längskanten einer am innen liegenden Bandteil ausgebildeten Zahnstange angeordnet. Jedem der beiden Spannritzel ist ein eigenes Sperrelement zugeordnet, welches über jeweils ein Federelement gegen das zugehörige Spannritzel drückt. Dieser Aufbau ist vergleichsweise aufwendig.

Durch die DE 20 2018 100 823 U1 ist eine Dichtungsinnenmanschette zum Einsetzen in Rohre bekannt. Diese weist einen Manschettenkörper aus einem ringförmig gebogenen Band auf, wobei sich ein inneres Bandende und ein äußeres Bandende überlappen. Der Manschettenkörper ist aufweitbar, so dass das innere Bandende relativ zum äußeren Bandende entlang einer Aufweitrichtung verlagerbar ist. Eine Arretierungsanordnung ist vorgesehen, welche verhindert, dass das innere Bandende relativ zum äußeren Bandende entgegen der Aufweitrichtung verlagerbar ist. Die Arretierungsanordnung weist einen am inneren Bandende in Umfangsrichtung angeordneten Schlitz mit einer Zahnreihe sowie einen Rastmechanismus mit einem Rastorgan auf. Das Rastorgan steht unter Einwirkung eines Federlements und greift in die Zahnreihe ein. Das Rastorgan und das Federelement sind in einer Kammer eines Führungskörpers angeordnet, wobei das Rastorgan in der Kammer verlagerbar ist.

Eine Dichtungsmanschette zum Einsetzen in ein Rohrleitungssystem zwecks Abdichtung von Leckstellen eines Rohrleitungssystems ist aus der WO 2019/158160 bekannt.

Insbesondere die Sanierung von Liner-Enden, in denen ein Liner in ein Rohr übergeht, stellt einen zusätzlichen Fertigungsaufwand dar, da die Sprünge in den Rohrdurchmessern eine spezifische Fertigung der Stahlprofile erfordern. Üblicherweise wird die äußere Dichtungsmanschette über zwei Spannbänder auf den jeweiligen Durchmesser aufgespannt. Hier setzt die Erfindung an.

Der Erfindung liegt ausgehend vom Stand der Technik die Aufgabe zu Grunde eine Dichtungsinnenmanschette zu schaffen, die im Durchmesser variabel einstellbar ist und montagetechnisch sowie bauteiltechnisch verbessert ist.

Die Lösung dieser Aufgabe besteht in einer Dichtungsinnenmanschette gemäß Anspruch 1.

Vorteilhafte Ausgestaltungen und Weiterbildungen der erfindungsgemäßen Dichtungsinnenmanschette sind Gegenstand der abhängigen Ansprüche.

Bei der erfindungsgemäßen Dichtungsinnenmanschette zum Einsetzen in Rohre handelt es sich insbesondere um eine Liner-End-Manschette, die bei der Sanierung von Rohren am Liner-Ende, in denen ein Liner in ein Rohr übergeht, zum Einsatz gelangt. Die Dichtungsinnenmanschette kann variabel auf unterschiedlichste Durchmesser eingestellt werden. Auf diese Weise wird ein flexibles Innenabdichtungssystem bereitgestellt, welches mehrere Durchmesser abdeckt. Der Einbau der Dichtungsinnenmanschette mit einer diese außen umlaufend umgebenden Gummimanschette erfolgt mittels einer Montagevorrichtung, beispielsweise eines Versetzpackers.

Die Dichtungsinnenmanschette weist einen Manschettenkörper aus einem ringförmig gebogenen Band auf. Insbesondere besteht das Band aus korrosionsbeständigem Stahl, vorzugsweise Edelstahl. Bei dem ringförmig gebogenen Band überlappen sich ein inneres Bandende und ein äußeres Bandende in Umfangsrichtung. Der aus dem Band gebildete Manschettenkörper ist aufweitbar, so dass das innere Bandende relativ zum äußeren Bandende entlang eine Aufweitrichtung, also in Umfangsrichtung des Rohrs, verlagerbar ist. Über eine Arretierungsanordnung wird verhindert, dass die Bandenden zurückgleiten. Die Arretierungsanordnung verhindert, dass das innere Bandende sich relativ zum äußeren Bandende entgegen der Aufweitrichtung verlagert. Die Arretierungsanordnung weist einen am inneren Bandende in Umfangsrichtung angeordneten Schlitz mit einer Zahnreihe sowie einen Rastmechanismus mit einem Rastorgan auf. Das Rastorgan steht unter Einwirkung eines Federelements und greift in die Zahnung der Zahnreihe ein.

Das Rastorgang und das Federelement sind in einer Kammer eines Führungskörpers angeordnet, wobei das Rastorgan in der Kammer verlagerbar ist. Der Führungskörper ist insbesondere schlittenartig gestaltet und führt den Rastmechanismus in der Schlitzöffnung. Das Rastorgan greift unter dem Einfluss des Federelements mit seinen Rastzähnen in die Zahnung der Zahnreihe und kommt dort widerlagernd zum Eingriff. Eine Rückbewegung des inneren Bandendes relativ zum äußeren Bandende entgegen der Aufweitrichtung ist so gesperrt. In Abhängigkeit von der Zahnung der Zahnreihe ist die Aufweitbewegung sehr feinstufig möglich.

Ein Aspekt der Erfindung sieht vor, dass das Federelement zwischen einer Seitenwand der Kammer, insbesondere einer rückwärtigen Seitenwand der Kammer und einem Rückwandabschnitt des Rastorgans eingegliedert ist. Das Federelement drückt das Rastorgan in Richtung der Öffnung der Kammer, wobei die Rastzähne des Rastorgans aus der Öffnung in Richtung zur Zahnreihe vorstehen.

Die Kammer ist durch eine Abdeckung abgedeckt. Insbesondere deckt die Abdeckung eine obere Flachseite des Führungskörpers ab.

Der Führungskörper ist schlittenartig gestaltet und weist vorzugsweise eine im Wesentlichen rechteckförmige Grundkörperkonfiguration auf. Der Führungskörper bewegt sich in dem Schlitz der Arretierungsanordnung. An der einen Längskante des Schlitzes bewegt sich der Führungskörper an der Zahnreihe entlang. An der anderen Seite gleitet der Führungskörper entlang der der Zahnreihe gegenüberliegenden Längskante des Schlitzes.

Ein Aspekt der Erfindung sieht vor, dass die Abdeckung längsseitig vorstehende Führungslaschen aufweist. Dies verbessert die Führungseigenschaften und die Bewegung des Rastmechanismus entlang des Schlitzes. Gleichzeitig stabilisieren die oberen Führungslaschen die Arretierungsanordnung insgesamt.

Der Führungskörper ist am äußeren Bandende des Stahlbandes gefügt, insbesondere ist der Führungskörper an das Band genietet.

Das Federelement besteht erfindungsgemäß aus einem elastischen Kunststoff, insbesondere besteht das Federelement aus Synthesekautschuk. Der Werkstoff für das Federelement kann auf das jeweilige Einsatzmedium bzw. Fluid angepasst werden. Ein Aspekt sieht vor, dass das Federelement aus Ethylen-Propylen-DienKautschuk (EPDM) besteht, wenn der Einsatz im Trinkwasser-, Brauchwasser- oder Abwasser- sowie Kühlwasserbereich erfolgt. Ist ein Einsatz der Dichtungsinnenmanschette in Einsatzmedien, wie Benzin, Öl oder Gasen vorgesehen, kommt NBR (Nitrile Butadiene Rubber) als Federelement zum Einsatz. Dies gewährleistet eine hohe chemische Beständigkeit. Für den Einsatz mit hohen Anforderungen an die Temperaturbeständigkeit besteht das Federelement bevorzugt aus FKM (Fluorkautschuk).

Weiterhin ist erfindungsgemäß vorgesehen, dass die Kammer eine Mittelachse aufweist, welche unter einem Winkel zur Längsachse des Schlitzes angeordnet ist. Hierdurch kann die Kraftaufteilung beim Eingriff der Rastzähne des Rastorgans vorteilhaft unterstützt werden. Der Rastmechanismus ist selbsthemmend. Einem Ausrasten der Rastzähne des Rastkörpers wird so entgegengewirkt bzw. kann wirksam unterbunden werden.

Das Rastorgan ist in der Kammer des Führungskörpers federelastisch hin und her bewegbar. Das Rastorgan kann also gegen die Federkraft in die Kammer verlagert werden und durch das Federelement in Richtung zur Öffnung der Kammer gedrückt werden. Beim Aufspann- bzw. Aufweitvorgang des Manschettenkörpers gleiten die rückseitigen Zahnflanken der Zahnung der Zahnreihe einerseits und der Rastzähne des Rastorgans andererseits aneinander ab. In umgekehrter Richtung, also entgegen der Aufweitrichtung, greifen die Zahnung der Zahnreihe und der Rastzähne des Rastorgans ineinander.

Die Bewegung des Rastorgangs aus der Kammer heraus, also in Richtung zur Öffnung, ist erfindungsgemäß durch einen Anschlag begrenzt, der im Bereich der Öffnung der Kammer vorgesehen ist. Das Rastorgang ist in der Kammer in seiner Bewegungsrichtung durch die obere Abdeckung nach oben begrenzt. Durch die Federkraft des Federelements wird das Rastorgan in Richtung zur Öffnung der Kammer gedrückt.

Der Montagevorgang ist einfach gestaltet. Am Ende des Schlitzes ist eine Aussparung zum Durchführen des Rastmechanismus vorgesehen. Auch herstellungstechnisch ist die Dichtungsinnenmanschette vorteilhaft und rationell. Die Dichtungsinnenmanschette besteht aus einem gebogenen Band, vorzugsweise aus Metall, insbesondere aus Stahl. Über den Rastmechanismus kann der Manschettenkörper auf verschiedene Durchmesser aufgespannt werden. Vor dem Biegen des Manschettenkörpers wird am flachen Band die Aussparung für den Schlitz gestanzt. Diese weist einseitig die rillenförmige Zahnreihe auf und hat eine Aussparung zum Durchführen des Rastmechanismus. Die Aussparung ist gegenüber der Breite des Schlitzes vergrößert und ist so ausgelegt, dass der Führungskörper durch die Aussparung bewegt werden kann, einschließlich der oberen Abdeckung mit den längsseitig vorstehenden Führungslaschen. Der Rastmechanismus bzw. der Führungskörper des Rastmechanismus wird auf das noch ungebogene Band genietet. Anschließend wird das Band ringförmig zum Manschettenkörper geformt. Im fertigen Zustand lässt sich hier die Dichtungsinnenmanschette im Rohr auf den jeweils geforderten Durchmesser aufdrücken und im jeweiligen Durchmesser durch die Arretierungsanordnung mit dem Rastmechanismus arretieren.

Besonders bevorzugt besteht das Federelement aus EPDM für den Einsatz bei Trinkwasser, Rohwasser, industriellem und kommunalem Abwasser oder Kühlwasser. Für die chemische Beständigkeit zur Anwendung bei Benzin, Gas oder Ölen kommt NBR als Werkstoff für das Federelement zur Anwendung. Für eine hohe Temperaturbeständigkeit ist das Federelement aus FKM ausgeführt. Das Rastorgan besteht aus einem hochfesten Kunststoff oder Metall. Federelement und Rastorgan sind in der Kammer des Führungskörpers eingegliedert und dort durch die obere Abdeckung lagerorientiert. Ansonsten ist das Rastorgan in der Kammer hin und her bewegbar, wobei es sich gegen das Federelement abstützt. Durch die Rückstellkräfte die Elastizität des Federelements wird das Einrasten des Rastorgans in die Zahnung der Zahnreihe im Schlitz ermöglicht.

Die Erfindung ist nachfolgend anhand von Zeichnungen näher beschrieben. Es zeigen:
- Figur 1: eine erfindungsgemäße Dichtungsinnenmanschette in einer perspektivischen Darstellungsweise;
- Figur 2: die Dichtungsinnenmanschette in einer aufgeweiteten Stellung;
- Figur 3: das den Manschettenkörper der Dichtungsinnenmanschette bildende Band in einer Abwicklung;
- Figur 4: das Band gemäß der Darstellung von Figur 3 mit aufgenietetem Rastmechanismus;
- Figur 5: ebenfalls in einer Perspektive Bauteile des Rastmechanismus der Dichtungsinnenmanschette;
- Figur 6: einen Führungskörper;
- Figur 7: ein Rastorgan;
- Figur 8: ein Federelement;
- Figur 9: die Abdeckung des Rastmechanismus;
- Figur 10: die erfindungsgemäße Dichtungsinnenmanschette wiederum in einer Perspektive mit der Darstellung des in der Aussparung des Schlitzes im inneren Bandende angeordneten Führungskörper des Rastmechanismus ohne Abdeckung;
- Figur 11: eine perspektivische Ansicht auf eine im Bereich des Rohrübergangs zwischen zwei Rohren eingebaute Dichtungsinnenmanschette und
- Figur 12: die eingebaute Dichtungsinnenmanschette entsprechend der Darstellung von Figur 11 in einer vertikalen Schnittdarstellung.

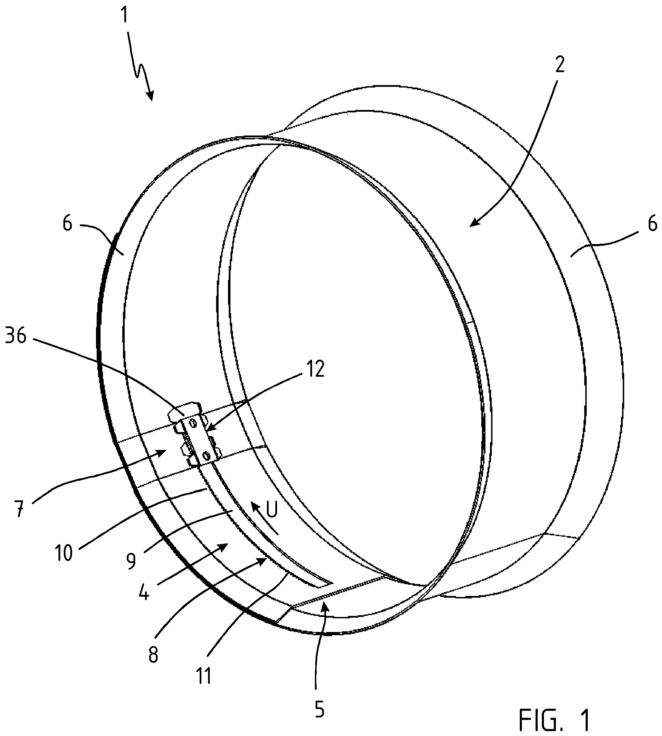

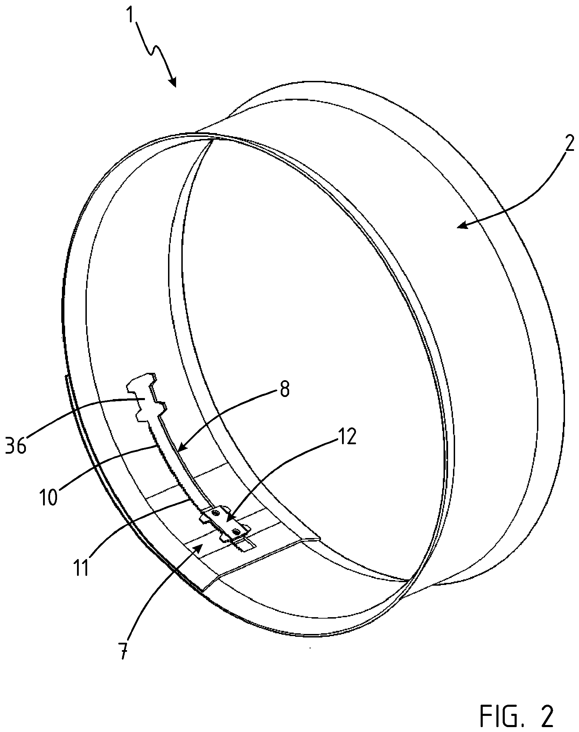

Eine erfindungsmäße Dichtungsinnenmanschette 1 zum Einsetzen in Rohre ist in der Figur 1 und der Figur 2 perspektivisch dargestellt.

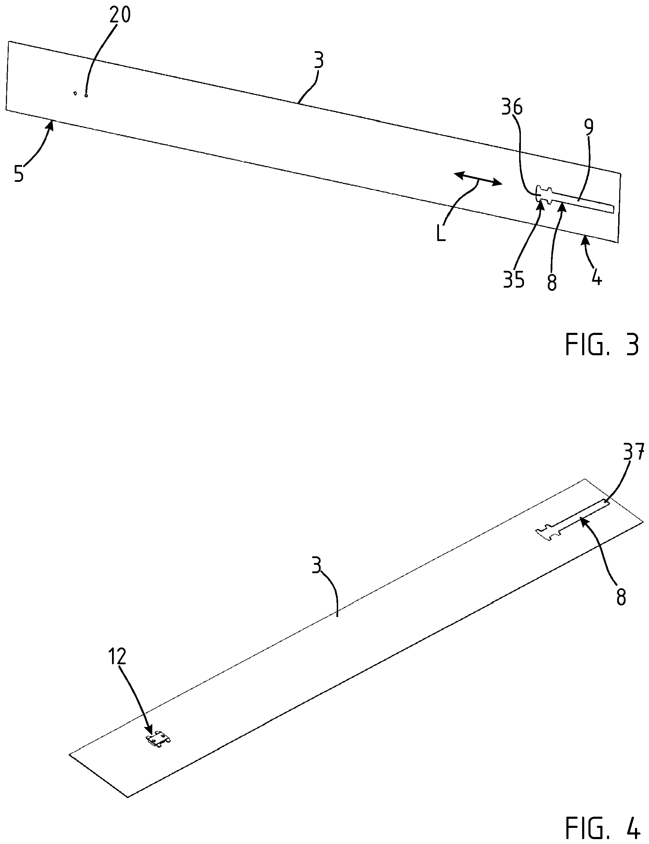

Die Dichtungsinnenmanschette 1 weist einen Manschettenkörper 2 aus einem ringförmig gebogenen Band 3 auf. Die ebene Abwicklung des Bandes 3 ist in der Figur 3 und der Figur 4 zu erkennen.

Das Band 3 wird ringförmig zum Manschettenkörper 2 gebogen, so dass sich ein inneres Bandende 4 und ein äußeres Bandende 5 überlappen. Der Manschettenkörper 2 der Dichtungsinnenmanschette 1 ist vor Ort im Rohr aufweitbar. Hierbei werden die überlappenden Bandenden 4, 5 relativ zueinander verlagert. Insbesondere wird das innere Bandende 4 relativ zum äußeren Bandende 5 entlang einer Aufweitrichtung U verlagert. Beim Einbau in ein Rohr ist die Dichtungsinnenmanschette 1 außen von einer Gummidichtung bzw. einer Gummimanschette umgeben. Diese ist hier nicht dargestellt. Die Figur 2 zeigt die Dichtungsinnenmanschette 1 in einer aufgeweiteten Stellung.

Das Band 3 bzw. der Manschettenkörper 2 weist jeweils stirnseitig eine Aufbördelung 6 auf. Die Aufbördelung 6 ist gegen die Fließrichtung gerichtet und verbessert die Hydrodynamik. Des Weiteren verhindert die Aufbördelung 6 eine Ablagerung von Feststoffen und erhöht zudem die Hochdruckfestigkeit bei Reinigungs- bzw. Spülvorgängen.

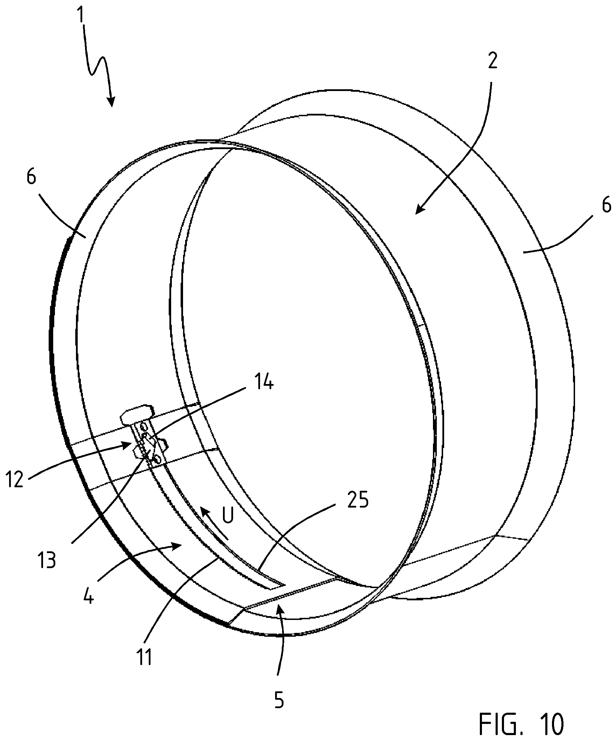

Die Dichtungsinnenmanschette 1 weist eine Arretierungsanordnung 7 auf, welche verhindert, dass sich der Manschettenkörper 2 wieder zusammenzieht, insbesondere, dass sich das innere Bandende 4 relativ zum äußeren Bandende 5 entgegen der Aufweitrichtung U verlagert. Die Arretierungsanordnung 7 weist einen am inneren Bandende 4 in Umfangsrichtung angeordneten Schlitz 8 mit einer Schlitzöffnung 9 sowie einer Zahnreihe 10 an einer Längskante 11 auf. Des Weiteren ist ein Rastmechanismus 12 mit einem Rastorgan 13 vorgesehen. Das Rastorgan 13 steht unter Einwirkung eines Federelements 14 und drückt das Rastorgan 13 gegen die Zahnreihe 10. Hierbei kommt das Rastorgan 13 mit seinen Rastzähnen 15 in die Zahnung der Zahnreihe 10 zum Eingriff (siehe hierzu auch Figur 10).

Das Rastorgan 13 und das Federelement 14 sind in einer Kammer 16 eines Führungskörpers 17 angeordnet. Das Rastorgan 13 ist in der Kammer 16 begrenzt verlagerbar. Gegen den Druck des Federelements 14 kann das Rastorgan 13 nach innen in die Kammer 16 verlagert bzw. geschoben werden. Die Rückstellkräfte des Federelements 14 bewirken, dass das Rastorgan 13 in Richtung zur Öffnung 18 der Kammer 16 gedrückt wird.

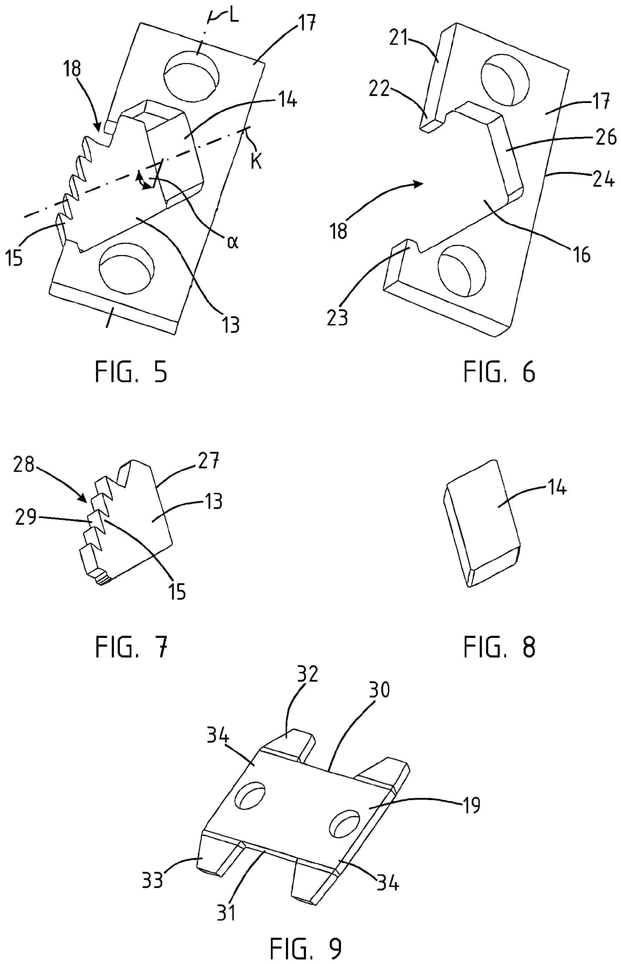

Der Rastmechanismus 12 mit dem Führungskörper 17, dem Rastorgan 13 und dem Federelement 14 ist in der Figur 5 zu erkennen. Figur 6 zeigt den rechteckig konfigurierten Führungskörper 17. Das Rastorgan 13 ist in der Figur 7 und das Federelement 14 ist in der Figur 8 als Einzelteil dargestellt.

Oberseitig des Führungskörpers 17 ist eine Abdeckung 19 vorgesehen. Als Einzelteil ist die Abdeckung 19 in der Figur 9 zu erkennen.

Die Abdeckung 19 deckt die Kammer 16 im Führungskörper 17 mit dem darin eingegliederten Rastorgan 13 und dem Federelement 14 ab.

Der Rastmechanismus 12 wird am äußeren Bandende 5 mittels Nieten 20 gefügt. Die Nieten 20 sind in der Figur 3 durch Darstellung der Öffnungen für die Nieten 20 verdeutlicht. Die Figur 4 zeigt das Band 3 mit aufgenietetem Rastmechanismus 12. Der Führungskörper 17 ist rechteckig konfiguriert und weist an einer Längsseite 21 die Öffnung 18 der Kammer 16 auf. Im Bereich der Öffnung 18 sind Anschläge 22, 23 vorgesehen. Die Anschläge 22, 23 begrenzen die auswärts gerichtete Bewegung des Rastorgans 13 in der Kammer 16. Die Anschläge 22, 23 sind durch Stegleisten jeweils an der öffnungsseitigen Längsseite 21 des Führungskörpers 17 ausgebildet.

Der Rastmechanismus 12 gleitet mit seinem Führungskörper 17 schlittenartig in der Schlitzöffnung 9 des Schlitzes 8. Hierbei gleitet die der Öffnung 18 der Kammer 16 gegenüberliegende Längsseite 24 des Führungskörpers 17 an der der Zahnreihe 10 gegenüberliegenden glatten bzw. unverzahnt ausgebildeten Längskante 25 des Schlitzes 8.

Das Federelement 14 besteht aus Synthese-Kautschuk nämlich Ethylen-Propylen-Dien-Kautschuk (EPDM). Je nach Einsatzmedium kann das Federelement 14 auch aus NBR oder FKM bestehen. Das Federelement 14 ist quaderförmig konfiguriert und kann massiv ausgeführt sein. Möglich ist auch, dass das Federelement 14 eine innen liegende Hohlkammer aufweist. Das Federelement 14 ist zwischen einer rückwärtigen Seitenwand 26 der Kammer 16 und einem Rückwandabschnitt 27 des Rastorgans 13 eingegliedert. An seiner Vorderseite 28 weist das Rastorgan 13 eine Reihe Rastzähne 15 auf. Das Federelement 14 drückt das Rastorgan 13 in Richtung der Öffnung 18 der Kammer 16, so dass die Rastzähne 15 des Rastorgans 13 aus der Öffnung 18 in Richtung zur Zahnreihe 10 vorstehen. Die Rastzähne 15 kommen mit der Zahnung der Zahnreihe 10 zum Eingriff. Bei der Aufweitbewegung gleiten die Zahnrücken 29 der Rastzähne 15 an der Zahnung der Zahnreihe 10 entlang. Sobald eine Kraft in Gegenrichtung der Aufweitrichtung U wirkt, greifen die Rastzähne 15 in die Zahnung der Zahnreihe 10 und verhindern so eine Bewegung des inneren Bandendes 4 relativ zum äußeren Bandende 5 entgegen der Aufweitrichtung U. Der Aufweitvorgang erfolgt nahezu stufenlos.

Die Kammer 16 weist eine Mittelachse K auf, welche unter einem Winkel α zur Längsachse L des Schlitzes 8 angeordnet ist.

Die Figuren 5 - 9 zeigen die Bauteile des Rastmechanismus 12. Die einzelnen Darstellungen sind nicht maßstäblich aufeinander abgestimmt. Die Abdeckung 19 deckt die obere Flachseite des Führungskörpers 17 ab. Die Abdeckung 19 weist jeweils an ihren Längsseiten 30, 31 zwei flügelartige Führungslaschen 32, 33 auf. Die Führungslaschen 32, 33 sind jeweils an dem vorderen und hinteren Ende 34 angeordnet und liegen sich gegenüber. Diese Ausgestaltung unterstützt die Schlittenkonfiguration des Führungskörpers 17 bzw. des Rastmechanismus 12 und trägt zu einer sicheren Haltung des Rastmechanismus 12 im Schlitz 8 bei.

Zur Durchführung des Rastmechanismus 12 bzw. Einführung in den Schlitz 8 weist der Schlitz 8 an einem Ende 35 einer Aussparung 36 auf. Die Aussparung 36 ist konfigurativ auf die Außenabmessungen des Rastmechanismus 12, insbesondere auf die Außenabmessung der Abdeckung 19 angepasst. Durch die seitlichen Führungslaschen 33, 34 weist die Abdeckung 19 eine Doppel-T-förmige Konfiguration auf. Entsprechend ist die Aussparung 36 am Ende 35 des Schlitzes 8 Doppel-T-förmig konfiguriert.

Der Rastmechanismus 12 wird über die Aussparung 36 in das innere Bandende 4 eingeführt und im Schlitz 8 positioniert. Die Figur 10 zeigt den in der Aussparung 36 positionierten Rastmechanismus 12 ohne seine obere Abdeckung 19. Die Breite des Führungskörpers 17 ist auf die Schlitzöffnung 9, also die Breite des Schlitzes 8, angepasst.

Nachdem der Rastmechanismus 12 in den Schlitz 8 eingeführt und positioniert ist, kann der Manschettenkörper 2 der Dichtungsinnenmanschette 1 aufgeweitet werden. Während des Aufweitvorgangs wird das Band 3 bzw. die Bandenden 4, 5 durch die Arretierungsanordnung 7 geführt. Der Rastmechanismus 12 kann nur in einer Richtung bewegt werden und verhindert das Zusammenziehen des Manschettenkörpers 2 nach dem Aufspannen entgegen der Aufweitrichtung U. Der Aufweitvorgang kann so weit fortgeführt werden, bis der Rastmechanismus 12 im Schlitz 8 am der Aussparung 36 gegenüberliegenden Schlitzende 37 zur Anlage gelangt.

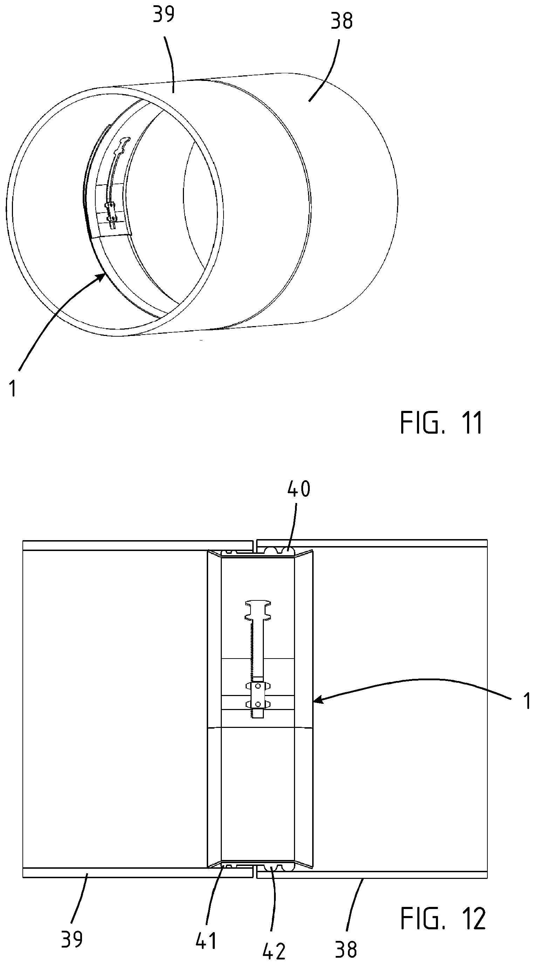

Die Figuren 11 und 12 zeigen eine Dichtungsinnenmanschette 1 eingebaut im Übergangsbereich zwischen zwei Rohrleitungsabschnitten 38, 39. Außen ist die Dichtungsinnenmanschette 1 von einer Gummimanschette 40 umgeben. Die Gummimanschette 40 ist geometrisch in Breite und Durchmesser auf den Rohrübergang und den Fugenversatz zwischen den Rohrleitungsabschnitten 38, 39 angepasst und weist verschieden dicke Dichtnoppen 41, 42 auf. Die Dichtnoppen 41, 42 verlaufen am Außenumfang der Gummimanschette 40 umlaufend und in sich geschlossen.

Der Werkstoff der Gummimanschette 40 ist auf das jeweilige Einsatzmedium abgestimmt. Durch die Aufbördelung 6 an beiden Stirnseiten der Dichtungsinnenmanschette 1 ist die Gummimanschette 40 gekammert und im Rohrleitungssystem geschützt.

Die Dichtungsinnenmanschette 1 kann zur Sanierung aller gängigen Rohrarten verwendet werden, beispielsweise Rohre aus Steinzeug, Betonrohre, Kunststoffrohre, GFK-Rohre, Gussrohre oder Stahlrohre.

### Bezugszeichen:

- 1 -: Dichtungsinnenmanschette
- 2 -: Manschettenkörper
- 3 -: Band
- 4 -: inneres Bandende
- 5 -: äußeres Bandende
- 6 -: Aufbördelung
- 7 -: Arretierungsanordnung
- 8 -: Schlitz
- 9 -: Schlitzöffnung
- 10 -: Zahnreihe
- 11 -: Längskante
- 12 -: Rastmechanismus
- 13 -: Rastorgan
- 14 -: Federelement
- 15 -: Rastzähne von 13
- 16 -: Kammer
- 17 -: Führungskörper
- 18 -: Öffnung von 16
- 19 -: Abdeckung
- 20 -: Nieten
- 21 -: Längsseite von 17
- 22 -: Anschlag
- 23 -: Anschlag
- 24 -: Längsseite von 17
- 25 -: Längskante
- 26 -: Seitenwand von 16
- 27 -: Rückwandabschnitt von 13
- 28 -: Vorderseite von 13
- 29 -: Zahnrücken
- 30 -: Längsseite von 19
- 31 -: Längsseite von 19
- 32 -: Führungslasche
- 33 -: Führungslasche
- 34 -: Ende von 19
- 35 -: Ende von 8
- 36 -: Aussparung von 35
- 37 -: Schlitzende
- 38 -: Rohrleitungsabschnitt
- 39 -: Rohrleitungsabschnitt
- 40 -: Gummimanschette
- 41 -: Dichtnoppen
- 42 -: Dichtnoppen

- U -: Aufweitrichtung
- K -: Mittelachse
- L -: Längsachse
- α -: Winkel

## Patentansprüche

1. Dichtungsinnenmanschette (1) zum Einsetzen in Rohre, mit einem Manschettenkörper (2) aus einem ringförmig gebogenen Band (3), wobei sich ein inneres Bandende (4) und ein äußeres Bandende (5) überlappen und wobei der Manschettenkörper (2) aufweitbar ist, so dass das innere Bandende (4) relativ zum äußeren Bandende (5) entlang einer Aufweitrichtung (U) verlagerbar ist und eine Arretierungsanordnung (7) vorgesehen ist, welche verhindert, dass das innere Bandende (4) relativ zum äußeren Bandende (5) entgegen der Aufweitrichtung (U) verlagerbar ist, wobei die Arretierungsanordnung (7) einen am inneren Bandende (4) in Umfangsrichtung angeordneten Schlitz (8) mit einer Zahnreihe (10) sowie einen Rastmechanismus (12) mit einem Rastorgan (13) aufweist, wobei das Rastorgan (13) unter Einwirkung eines Federelements (14) steht und in die Zahnreihe (10) eingreift und das Rastorgan (13) und das Federelement (14) in einer Kammer (16) eines Führungskörpers (17) angeordnet sind, wobei das Rastorgan (13) in der Kammer (16) verlagerbar ist, **dadurch gekennzeichnet, dass** das Federelement (14) aus einem elastischen Kunststoff besteht und die Kammer (16) eine Mittelachse (K) aufweist, welche unter einem Winkel (a) zur Längsachse (L) des Schlitzes (8) angeordnet ist sowie im Bereich der Öffnung (18) der Kammer (16) ein Anschlag (22, 23) für das Rastorgan (13) vorgesehen ist.

2. Dichtungsinnenmanschette nach Anspruch 1, **dadurch gekennzeichnet, dass** das Federelement (14) zwischen einer Seitenwand (26) der Kammer (16) und einem Rückwandabschnitt (27) des Rastorgans (13) eingegliedert ist und das Federelement (14) das Rastorgan (13) in Richtung einer Öffnung (18) der Kammer (16) drückt, wobei Rastzähne (15) des Rastorgans (13) aus der Öffnung (18) in Richtung zur Zahnreihe (10) vorstehen.

3. Dichtungsinnenmanschette nach Anspruch 1 oder 2, **dadurch gekennzeichnet, dass** die Kammer (16) durch eine Abdeckung (19) abgedeckt ist.

4. Dichtungsinnenmanschette nach Anspruch 3, **dadurch gekennzeichnet, dass** die Abdeckung (19) eine obere Flachseite des Führungskörpers (17) abdeckt.

5. Dichtungsinnenmanschette nach Anspruch 3 oder 4, **dadurch gekennzeichnet, dass** die Abdeckung (19) längsseitig vorstehende Führungslaschen (32, 33) aufweist.

6. Dichtungsinnenmanschette nach einem der Ansprüche 1 bis 5, **dadurch gekennzeichnet, dass** das Federelement (14) aus Synthesekautschuk besteht.

7. Dichtungsinnenmanschette nach einem der Ansprüche 1 bis 6, **dadurch gekennzeichnet, dass** an einem Ende (35) des Schlitzes (8) eine Aussparung (36) zum Durchführen des Rastmechanismus (12) vorgesehen ist.

## Claims

1. Inner sealing sleeve (1) for inserting into pipes, comprising a sleeve body (2) made of an annularly bent band (3), wherein an inner band end (4) and an outer band end (5) overlap and wherein the sleeve body (2) can be expanded so that the inner band end (4) can be displaced relative to the outer band end (5) along an expanding direction (U) and a locking arrangement (7) is provided, which prevents the inner band end (4) from being displaceable relative to the outer band end (5) in the direction opposite to the expanding direction (U), wherein the locking arrangement (7) has a slot (8) arranged on the inner band end (4) in the circumferential direction and has a row of teeth (10), and a latching mechanism (12) with a latching element (13), wherein the latching member (13) is acted upon by a spring element (14) and engages in the row of teeth (10), and the latching member (13) and the spring element (14) are arranged in a chamber (16) of a guide body (17), wherein the latching member (13) is displaceable in the chamber (16), **characterised in that** the spring element (14) consists of an elastic plastics material and the chamber (16) has a central axis (K) arranged at an angle (α) to the longitudinal axis (L) of the slot (8), and a stop (22, 23) for the latching element (13) is provided in the region of the opening (18) of the chamber (16).

2. Inner sealing sleeve according to claim 1, **characterised in that** the spring element (14) is incorporated between a side wall (26) of the chamber (16) and a rear wall portion (27) of the latching member (13) and the spring element (14) presses the latching member (13) towards an opening (18) of the chamber (16), wherein latching teeth (15) of the latching member (13) project from the opening (18) towards the row of teeth (10).

3. Inner sealing sleeve according to claim 1 or 2, **characterised in that** the chamber (16) is covered by a cover (19).

4. Inner sealing sleeve according to claim 3, **characterised in that** the cover (19) covers an upper flat side of the guide body (17).

5. Inner sealing sleeve according to claim 3 or 4, **characterised in that** the cover (19) has longitudinally projecting guide tabs (32, 33).

6. Inner sealing sleeve according to any one of claims 1 to 5, **characterised in that** the spring element (14) consists of synthetic rubber.

7. Inner sealing sleeve according to any one of claims 1 to 6, **characterised in that** a recess (36) is provided at one end (35) of the slot (8) for the latching mechanism (12) to pass through.

## Revendications

1. Manchon d'étanchéité interne (1) destiné à être inséré dans des tuyaux, comprenant un corps de manchon (2) constitué d'une bande (3) incurvée sous la forme d'un anneau, dans lequel une extrémité de bande interne (4) et une extrémité de bande externe (5) se chevauchent et dans lequel le corps de manchon (2) est extensible, de sorte que l'extrémité de bande interne (4) peut être déplacée par rapport à l'extrémité de bande externe (5) le long d'une direction d'extension (U) et un agencement d'arrêt (7) est prévu, lequel empêche que l'extrémité de bande interne (4) puisse être déplacée par rapport à l'extrémité de bande externe (5) à l'opposé de la direction d'extension (U), dans lequel l'agencement d'arrêt (7) présente une fente (8) avec une rangée de dents (10) agencée au niveau de l'extrémité de bande interne (4) dans une direction circonférentielle, ainsi qu'un mécanisme de verrouillage (12) avec un élément de verrouillage (13), dans lequel l'élément de verrouillage (13) est soumis à l'action d'un élément de ressort (14) et vient en prise dans la rangée de dents (10), et l'élément de verrouillage (13) et l'élément de ressort (14) sont agencés dans une chambre (16) d'un corps de guidage (17), dans lequel l'élément de verrouillage (13) peut être déplacé dans la chambre (16), **caractérisé en ce que** l'élément de ressort (14) est constitué d'une matière plastique élastique et la chambre (16) présente un axe central (K) qui est agencé selon un angle (α) par rapport à l'axe longitudinal (L) de la fente (8), et une butée (22, 23) pour l'élément de verrouillage (13) est prévue dans la région de l'ouverture (18) de la chambre (16).

2. Manchon d'étanchéité interne selon la revendication 1, **caractérisé en ce que** l'élément de ressort (14) est intégré entre une paroi latérale (26) de la chambre (16) et une section de paroi arrière (27) de l'élément de verrouillage (13), et l'élément de ressort (14) pousse l'élément de verrouillage (13) en direction d'une ouverture (18) de la chambre (16), dans lequel des dents de verrouillage (15) de l'élément de verrouillage (13) font saillie à partir de l'ouverture (18) en direction de la rangée de dents (10).

3. Manchon d'étanchéité interne selon la revendication 1 ou 2, **caractérisé en ce que** la chambre (16) est recouverte par un couvercle (19).

4. Manchon d'étanchéité interne selon la revendication 3, **caractérisé en ce que** le couvercle (19) recouvre un côté plat supérieur du corps de guidage (17).

5. Manchon d'étanchéité interne selon la revendication 3 ou 4, **caractérisé en ce que** le couvercle (19) présente des languettes de guidage (32, 33) faisant saillie longitudinalement.

6. Manchon d'étanchéité interne selon l'une quelconque des revendications 1 à 5, **caractérisé en ce que** l'élément de ressort (14) est constitué de caoutchouc synthétique.

7. Manchon d'étanchéité interne selon l'une quelconque des revendications 1 à 6, **caractérisé en ce qu'**un évidement (36) pour faire passer le mécanisme de verrouillage (12) est prévu au niveau d'une extrémité (35) de la fente (8).
